# EUROPEAN PATENT APPLICATION

(11) **EP 3 340 562 A1**
(43) Date of publication of application: **27.06.2018**
(21) Application number: 16206862.1
(22) Date of filing: 23.12.2016
(51) Int. Cl.: H04L 29/06

(54) **SECURE ACCESS VERIFICATION METHOD AND SECURE ACCESS VERIFICATION SYSTEM**

(71) Applicant: Vestel Elektronik Sanayi ve Ticaret A.S., 45030 Manisa (TR)
(72) Inventor: KIRISKEN, Barbaros, 45030 Manisa (TR)
(74) Representative: Ascherl, Andreas

(57) **Abstract**

The present invention provides a secure access verification method for securely verifying access of a user (104, 204) to an electronic system (207), the method comprising generating (S1) a password (103, 203) for the user (104, 204) of the electronic system (207), sending (S2) the password (103, 203) to the user (104, 204), waiting (S3) for a first predetermined amount of time (105, 205) for the user (104, 204) to enter the sent password (103, 203), and increasing (S4) the first predetermined amount of time (105, 205), if the password (103, 203) is not delivered to the user (104, 204) within a second predetermined amount of time (106, 206). The present invention further provides a secure access verification system (100, 200).

## Description

### TECHNICAL FIELD

The invention relates to a secure access verification method and a secure access verification system.

### BACKGROUND

Although applicable to any system that provides users with a login possibility, the present invention will particularly be described in conjunction with a user login for a web page.

Modern web pages may provide users with private sections, where a user can e.g. enter and modify his private data, view confidential information, like e.g. bank account information, or perform private communication or approving transactions which needs high security such as electronic fund transfers.

Such sections of web pages are usually secured via a login page, where a user must provide a user name and/or a password to gain access to his private section. The user can e.g. be provided with a single password that allows him to log in into the private section. However, if the user loses or shares this single password the security of his private section can be compromised or stolen.

An alternative for a single password can e.g. be a password list with a predetermined number of one-time passwords. That means that every password of the list can be used only once. Another alternative is to transmit the one time password to the user, when it is required. To prevent possible fraud such one-time passwords are only valid for a certain amount of time. That means that if the password is delayed on the way to the user, the password is invalidated and the user can't log in any more. Therefore, there is a need to provide users with an improved login scheme to private sections of web pages.

### SUMMARY

The present invention provides a secure access verification method with the features of claim 1 and a secure access verification system with the features of claim 9.

Therefore, a secure access verification method for securely verifying access of a user to an electronic system comprises generating a password for the user of the electronic system, sending the password to the user, waiting for a first predetermined amount of time for the user to enter the sent password, and increasing the first predetermined amount of time, if the password is not delivered to the user within a second predetermined amount of time.

Further, a secure access verification system for securely verifying access of a user to an electronic system comprises a verification controller, which is configured to generate a password for the user of the electronic system, and a communication interface, which is coupled to the verification controller and which is configured to send the password to the user, wherein the verification controller is configured to wait for a first predetermined amount of time for the user to enter the sent password, and wherein the verification controller is configured to increase the first predetermined amount of time, if the password is not delivered to the user within a second predetermined amount of time.

As already explained above, known systems may provide the user with a one-time password via a data network. Such transmissions can be delayed and the password can therefore be invalidated by a timeout without the user being able to log in.

The present invention generates a password, e.g. a one-time password that can only be used once, when it is needed for a user login. The newly generated password is then transmitted to the user, e.g. an electronic device of or under control of the user, and the user is provided with the first predetermined amount of time to enter the password.

Waiting for the first predetermined amount of time will allow the password to travel to the user e.g. through a data network like a cell phone network or the internet prior to invalidating the password.

However, the transmission of the password may be delayed on the way to the user. In this case, the present invention can prevent the invalidation of the password, if the password has not been transmitted within the second predetermined amount of time. It is noted, that the first predetermined amount of time can be the same as the second predetermined amount of time.

If the password is not delivered to the user within the second predetermined amount of time, the first predetermined amount of time is increased. This will provide the user with enough time to receive and enter the password. The first predetermined amount of time at the beginning of the access verification can e.g. have a specific value but is not constant or fixed and can e.g. be increased by that specific amount.

Increasing can e.g. comprise adding a certain amount of time, e.g. the original first predetermined amount, to the first predetermined amount. The counter for the second predetermined amount can then e.g. be reset to zero and be restarted.

The present invention therefore provides users with a flexible and adaptable login scheme, which takes into account delays of the password on the way to the user. Aborted or failed logins can therefore be reduced.

Further embodiments of the present invention are subject of the further subclaims and of the following description, referring to the drawings.

In one embodiment, sending can comprise sending the password to the user via SMS and/or E-Mail or a telephone call. This provides the flexibility to use different and diverse communication channels to transmit the password to the user. If for example the user is trying to log into a system via a computer, it may be inadequate to send the password to the user via e-mail to the same computer because malware could intercept it. The password can then e.g. be sent to the user via another channel, e.g. SMS.

In one embodiment, the method can comprise requesting a delivery receipt when sending the password to the user. It is possible in most modern communication systems to request a delivery receipt. For example, e-mail servers can provide a notification when the e-mail is received or read. Also SMS servers or cell phone network providers can provide a feedback or notification when the SMS is delivered to the recipient or read by the recipient. As long as the message, i.e. the password, is not delivered to the user, no such notification will be issued. The requested delivery receipt can be such a notification and therefore allows verifying if and when the password is transmitted to the user.

In one embodiment, sending can comprise sending the password to the user via a dedicated software application, and the delivery receipt can be created in the dedicated software application. The dedicated software application can e.g. run on a smartphone or a computer of the user, i.e. can e.g. be installed on a user's device. The user can. e.g. be provided with a download link to the application, if he has not yet installed the application. If the password is sent via the dedicated software application the application may take into account that malware could possibly be present and provide respective encryption of the password to prevent the malware from copying the password. Further, a dedicated software application can integrate the transmission of the password into an ecosystem of the provider of the access system.

In one embodiment, the method can comprise verifying the password when it is entered by the user, e.g. comparing the entered password to the sent password, and granting access to the user if the verification result is positive. The access can be any type of access, like e.g. access to a website or the like. However, the present invention is not limited to website access. The present invention can e.g. also be used for controlling access to locally installed programs, hardware arrangements like e.g. security doors or safes or the like.

In one embodiment, the method can comprise denying access to the user if the verification result is negative. If for example the password was entered wrong by the user, naturally access is denied.

In one embodiment, the second predetermined amount of time can be shorter than the first predetermined amount of time. This will allow the user to still enter the password, even if it is received shortly before the end of the second predetermined amount of time.

In one embodiment, the password can be discarded after the first predetermined amount of time has been increased for a predetermined number of times, and the first predetermined amount of time passes. The predetermined number of times can e.g. be one or any number the operator of the secure access service chooses. As an alternative to the predetermined number of times, a maximum amount of time can be defined for the access verification method. If the user has not entered the correct password after that maximum amount of time, the access can e.g. be denied or the access verification can be restarted.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: shows a flow diagram of an embodiment of a method according to the present invention;
- Fig. 2: shows a flow diagram of another embodiment of a method according to the present invention;
- Fig. 3: shows a block diagram of an embodiment of a system according to the present invention; and
- Fig. 4: shows a block diagram of another embodiment of a system according to the present invention.

In the figures like reference signs denote like elements unless stated otherwise.

### DETAILED DESCRIPTION OF THE DRAWINGS

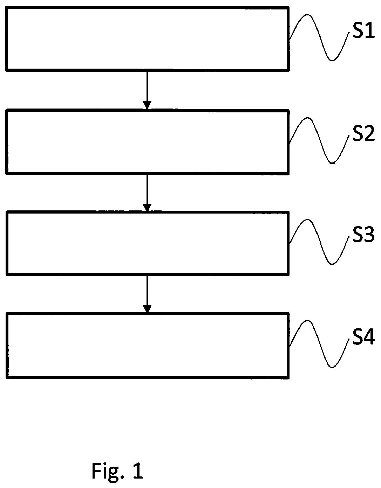

Fig. 1 shows a flow diagram of a secure access verification method for securely verifying access of a user 104, 204 to an electronic system 207. The method can e.g. be used in login procedures to webpages, computer systems or the like. It is understood that the method is not limited to remote systems reachable over a network. Instead, the present invention can e.g. also be used with electronic locks or doors or the like.

The secure access verification method comprises generating S1 a password 103, 203 for the user 104, 204 of the electronic system 207. The generated password 103, 203 is then sent S2 to the user 104, 204. The user 104, 204 as understood in this context can not only comprise the person but also any electronic device of a person that tries to gain access to the electronic system 207.

Since the password must be transmitted to the user 104, 204 the method comprises waiting S3 for a first predetermined amount of time 105, 205 for the user 104, 204 to enter the sent password 103, 203. The password 103, 203 must travel through e.g. an operator's network to the user 104, 204. On the path to the user 104, 204 the password can be delayed for various reasons depending on the type of network used for the transmission of the password 103, 203. The password 103, 203 can e.g. also be delayed because the receiving device, e.g. a smartphone, of the user is accidentally turned off.

Therefore, the method also comprises increasing S4 the first predetermined amount of time 105, 205, if the password 103, 203 is not delivered to the user 104, 204 within a second predetermined amount of time 106, 206. It is understood that the second amount of time 106, 206 can be equal to or smaller than the first amount of time 105, 205. Further, the password 103, 203 can also be discarded after the first predetermined amount of time 105, 205 has been increased for a predetermined number of times, and the first predetermined amount of time 105, 205 passes or after a fixed amount of time.

As already indicated above, the user 104, 204 can be represented by an electronic device. Therefore, sending S1 can comprise sending the password 103, 203 to the user 104, 204 via SMS 212 and/or E-Mail or a telephone call. The use of a dedicated software application is also possible.

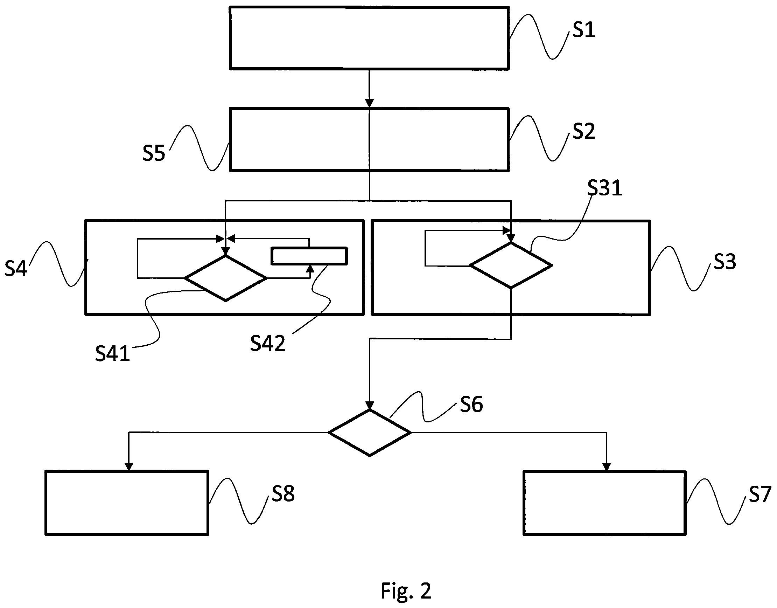

Fig. 2 shows a flow diagram of another secure access verification method for securely verifying access of a user 104, 204 to an electronic system 207. The method in Fig. 2 is based on the method in Fig. 1 and comprises further actions.

Parallel to sending S2 the password 103, 203 a delivery receipt 213 is requested S5. It is understood that requesting S5 the delivery receipt 213 can also be performed before or after sending S2 the password 103, 203. The delivery receipt 213 can then e.g. be generated by a server in the delivery network or by the receiving electronic device. If a dedicated software application is used to transmit the password 103, 203 the delivery receipt 213 can e.g. be created in the dedicated software application.

Waiting S3 for a first predetermined amount of time 105, 205 can comprise checking S31 if the first predetermined amount of time 105, 205 has passed and continuing only if the first predetermined amount of time 105, 205 has passed. In addition, increasing S4 can comprise checking S41 if the password 103, 203 is delivered to the user 104, 204, and increasing S42 the first predetermined amount of time 105, 205 only if the password 103, 203 is not delivered to the user 104, 204 within a second predetermined amount of time 106, 206.

After the user enters the password the method can verify S6 the password 103, 203 and grant S7 access to the user 104, 204 if the verification result is positive, and deny S8 access to the user 104, 204 if the verification result is negative.

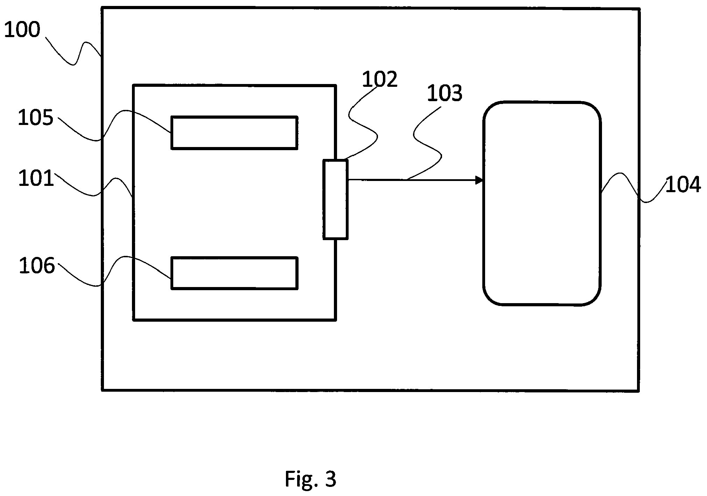

Fig. 3 shows a block diagram of an embodiment of a secure access verification system 100. The secure access verification system 100 can e.g. be used to securely verify access of a user 104 to an electronic system (not explicitly shown). Such an electronic system can be any type of system that grants access to users only after an access verification e.g. via a one-time password 103. In Fig. 3 the user 104 is shown as a smartphone 104, since the password 103 is transmitted from the secure access verification system 100 to an electronic device of the user. The smartphone 104 is just an example of a respective electronic device. The password 103 can e.g. also be transmitted to a telephone, e.g. by a phone call, or to a computer, e.g. via e-mail or a dedicated application.

The secure access verification system 100 comprises a verification controller 101 that performs the access verification. The verification controller 101 can therefore generate the password 103 for the user 104. The verification controller 101 can e.g. comprise a processor and a software that serves to generate the password 103. The verification controller 101 can also comprise dedicated integrated circuits, also called crypto ICs, that serve to generate the password.

The generated password 103 is then sent to the user 104 via communication interface 102. The communication interface 102 can be any type of adequate interface. The communication interface 102 can e.g. be a network connection, wired or wireless, that connects the secure access verification system 100 to a network, like e.g. the internet. The communication interface 102 can also be an interface to e.g. a cellular network of a telephone company. Further the communication interface 102 can e.g. be connected to the internet, where the password 103 is transmitted to an SMS or e-mail server, which then forwards the password 103 to the user via the respective network. Further, a dedicated software application can be used on the user's device, e.g. the smartphone 104 to deliver the password 103 to the user 104.

After sending the password 103 to the user 104 the verification controller 101 waits for a first predetermined amount of time 105 for the user 104 to enter the sent password 103. The first predetermined amount of time 105 can e.g. be 1 - 300 seconds, especially 1 - 3 minutes, and more specifically 1 minute. The first predetermined amount of time 105 will allow the network to deliver the password to the user 104.

However, the password can be delayed on the way to the user 104. Therefore, the verification controller 101 will increase the first predetermined amount of time 105, if the password 103 is not delivered to the user 104 within a second predetermined amount of time 106. The second predetermined amount of time 106 can e.g. be as along as the first predetermined amount of time 105. However, the second predetermined amount of time 106 can also be shorter than the first predetermined amount of time 105. This will provide the user 104 with enough time to enter the password 103, even if the password 103 is delivered at the end of the second predetermined amount of time 106.

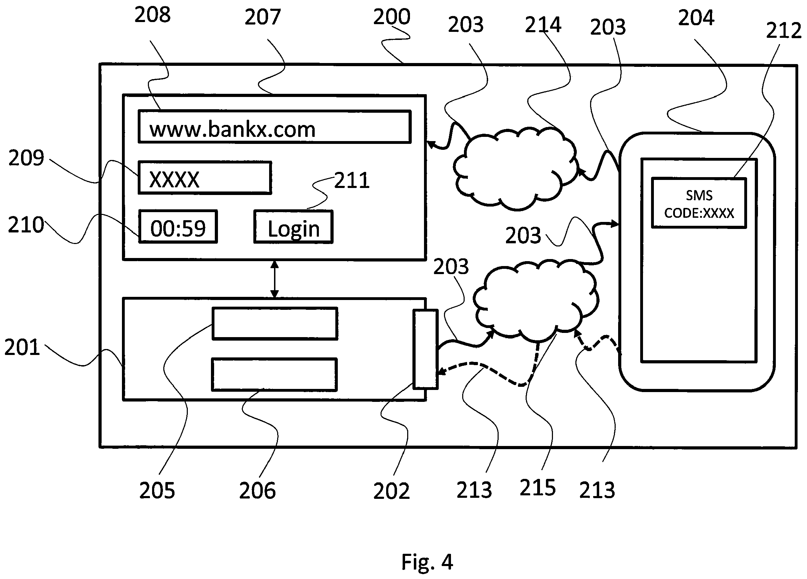

Fig. 4 shows a block diagram of another secure access verification system 200. The access verification system 200 is based on the access verification system 100 and is used to provide secure access to an online banking homepage 207. Just exemplarily the homepage 207 is shown as comprising an address field 208, a password field 209, a clock 210 and a login button 211. The clock 210 shows the user the remaining time he has to enter the password 203.

The verification controller 201 is connected to the online banking homepage 207 and to the service provider network 215, e.g. a cell phone provider. Even if this connection is shown as a direct connection, it is understood that an indirect connection, e.g. via the internet, is also possible. The verification controller 201 generates and transmits the password 203 via the service provider network 215 to the smartphone 204 of the user in a SMS 212, where it is shown to the user.

The user can then use the internet 214 to input the received password into the password field 209 of the online banking homepage 207. It is understood, that the service provider network 215 and the internet 214 are only used exemplarily and that any other adequate network can be used.

The verification controller 201 can e.g. request a delivery receipt 213 from the service provider network 215 when he sends the password 203 to the user 204. Such a delivery receipt can then for example be generated by an SMS server of the service provider network 215.

It is understood for the skilled person, that the verification controller 201 can also verify the password 203 when it is entered by the user 204. The verification controller 201 can then grant access to the user 204 if the verification result is positive and deny access to the user 204 if the verification result is negative.

In addition, if the user 204 does not receive the password 203 e.g. within a defined maximum time value or after the first predetermined amount of time 205 has been increased for a predetermined number of times, and the first predetermined amount of time 205 has passed, the verification controller 201 can also discard the password 203 and restart the login procedure.

It is understood, that although shown as separate entities in Fig. 4, the electronic system, e.g. the online banking homepage 207, and the verification controller 201 can also be combined into one single server.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides a secure access verification method for securely verifying access of a user 104, 204 to an electronic system 207, the method comprising generating (S1) a password 103, 203 for the user 104, 204 of the electronic system 207, sending (S2) the password 103, 203 to the user 104, 204, waiting (S3) for a first predetermined amount of time 105, 205 for the user 104, 204 to enter the sent password 103, 203, and increasing (S4) the first predetermined amount of time 105, 205, if the password 103, 203 is not delivered to the user 104, 204 within a second predetermined amount of time 106, 206. The present invention further provides a secure access verification system 100, 200.

### List of reference signs

- 100, 200: secure access verification system
- 101, 201: verification controller
- 102, 202: communication interface
- 103, 203: password
- 104, 204: smartphone
- 105, 205: first predetermined amount of time
- 106, 206: second predetermined amount of time
- 207: electronic system
- 208: address field
- 209: password field
- 210: clock
- 211: login button
- 212: SMS
- 213: delivery receipt
- 214: Internet
- 215: service provider network
- S1 - S8, S31, S41, S42: method actions

## Claims

1. Secure access verification method for securely verifying access of a user (104, 204) to an electronic system (207), the method comprising:
generating (S1) a password (103, 203) for the user (104, 204) of the electronic system (207);
sending (S2) the password (103, 203) to the user (104, 204);
waiting (S3) for a first predetermined amount of time (105, 205) for the user (104, 204) to enter the sent password (103, 203); and
increasing (S4) the first predetermined amount of time (105, 205), if the password (103, 203) is not delivered to the user (104, 204) within a second predetermined amount of time (106, 206).

2. Secure access verification method according to claim 1, wherein sending (S1) comprises sending the password (103, 203) to the user (104, 204) via SMS (212) and/or E-Mail or a telephone call.

3. Secure access verification method according to any one of the preceding claims, comprising requesting (S5) a delivery receipt (213) when sending the password (103, 203) to the user (104, 204).

4. Secure access verification method according to claim 3, wherein sending (S2) comprises sending the password (103, 203) to the user (104, 204) via a dedicated software application, and wherein the delivery receipt (213) is created in the dedicated software application.

5. Secure access verification method according to any one of the preceding claims, comprising verifying (S6) the password (103, 203) when it is entered by the user (104, 204) and granting (S7) access to the user (104, 204) if the verification result is positive.

6. Secure access verification method according to claim 5, comprising denying (S8) access to the user (104, 204) if the verification result is negative.

7. Secure access verification method according to any one of the preceding claims, wherein the second predetermined amount of time (106, 206) is shorter than the first predetermined amount of time (105, 205).

8. Secure access verification method according to any one of the preceding claims, wherein the password (103, 203) is discarded after the first predetermined amount of time (105, 205) has been increased for a predetermined number of times, and the first predetermined amount of time (105, 205) passes.

9. Secure access verification system (100, 200) for securely verifying access of a user (104, 204) to an electronic system (207), the secure access verification system (100, 200) comprising:
a verification controller (101, 201), which is configured to generate a password (103, 203) for the user (104, 204) of the electronic system (207);
a communication interface (102, 202), which is coupled to the verification controller (101, 201) and which is configured to send the password (103, 203) to the user (104, 204);
wherein the verification controller (101, 201) is configured to wait for a first predetermined amount of time (105, 205) for the user (104, 204) to enter the sent password (103, 203); and
wherein the verification controller (101, 201) is configured to increase the first predetermined amount of time (105, 205), if the password (103, 203) is not delivered to the user (104, 204) within a second predetermined amount of time (106, 206).

10. Secure access verification system (100, 200) according to claim 9, wherein the verification controller (101, 201) is configured to send the password (103, 203) to the user (104, 204) via SMS (212) and/or E-Mail or a telephone call.

11. Secure access verification system (100, 200) according to any one of the preceding claims 9 and 10, wherein the verification controller (101, 201) is configured to request a delivery receipt (213) when sending the password (103, 203) to the user (104, 204).

12. Secure access verification system (100, 200) according to claim 11, comprising a dedicated software application, especially on a user's (104, 204) electronic device,
wherein the verification controller (101, 201) is configured to send the password (103, 203) to the user (104, 204) via the dedicated software application, and wherein the dedicated software application is configured to create the delivery receipt (213).

13. Secure access verification system (100, 200) according to any one of the preceding claims 9 to 12, wherein the verification controller (101, 201) is configured to verify the password (103, 203) when it is entered by the user (104, 204) and wherein the verification controller (101, 201) is configured to grant access to the user (104, 204) if the verification result is positive and deny access to the user (104, 204) if the verification result is negative.

14. Secure access verification system (100, 200) according to any one of the preceding claims 9 to 13, wherein the second predetermined amount of time (106, 206) is shorter than the first predetermined amount of time (105, 205).

15. Secure access verification system (100, 200) according to any one of the preceding claims 9 to 14, wherein the verification controller (101, 201) is configured to discard the password (103, 203) after the first predetermined amount of time (105, 205) has been increased for a predetermined number of times, and the first predetermined amount of time (105, 205) passes.
